Europäisches Patentamt

European Patent Office

Office européen des brevets

(19)

(11) Veröffentlichungsnummer: **0 192 144 B1**

(12) **EUROPÄISCHE PATENTSCHRIFT**

(45) Veröffentlichungstag der Patentschrift: **13.05.92**

(21) Anmeldenummer: **86101621.0**

(22) Anmeldetag: **07.02.86**

(51) Int. Cl.⁵: **F28C 3/12**, C04B 2/10,
F27B 15/00, C04B 11/02,
B01J 8/12

(54) **Vorrichtung zur Durchführung eines Energie- und/oder Stoffaustausches zwischen oder an kleinkörnigen Feststoffen und einem fluiden Medium.**

(30) Priorität: **07.02.85 DE 3504214**

(43) Veröffentlichungstag der Anmeldung:
**27.08.86 Patentblatt 86/35**

(45) Bekanntmachung des Hinweises auf die
Patenterteilung:
**13.05.92 Patentblatt 92/20**

(84) Benannte Vertragsstaaten:
**AT BE CH DE FR GB IT LI LU NL SE**

(56) Entgegenhaltungen:
**GB-A- 668 180**
**US-A- 2 499 305**
**US-A- 2 873 177**

**PATENT ABSTRACTS OF JAPAN, Seite 535 C 78; & JP-A-53 21 076 (UNITIKA K.K.) 27-02-1978**

(73) Patentinhaber: **Schober, Franz Xaver, Dr.**
**Grünbergstrasse 9**
**W-8660 Münchberg/Ofr.(DE)**

Patentinhaber: **SCHMIDT, Adolf**
**Heinrich Plattstrasse 9a**
**W-6000 FRANKFURT/MAIN 50(DE)**

(72) Erfinder: **Schumacher, Otto, Dr.**
**Bayreuther Strasse 11**
**W-8591 Neusorg(DE)**

(74) Vertreter: **Kinzebach, Werner, Dr.**
**Patentanwälte Reitstötter, Kinzebach und Partner Sternwartstrasse 4 Postfach 86 06 49**
**W-8000 München 86(DE)**

## Beschreibung

Die Erfindung betrifft eine Vorrichtung zum Brennen von Feststoffen, ausgewählt unter Kalkstein, Dolomit, Magnesit und Gips, zur Abgäsentstaubung und zum regenerativen Energieaustausch im Bereich der Brenntemperaturen zwischen Feststoffen und fluiden Medien.

Vorrichtungen der vorbezeichneten Art werden z.B. für das Brennen von Kalkstein, Dolomit, Magnesit, Gips und dergleichen benötigt. Die für diese Zwecke bisher angewendeten Verfahren benutzen u.a. auch Schachtöfen. Aufgrund der Betriebsweise mit einem von oben nach unten gerichteten Materialstrom und einem von unten nach oben gerichteten Gasstrom (der auch am Fuß des Ofens eingeblasene Kühlluft umfaßt) ergibt sich eine Unterteilung in Kühl-, Brenn- und Vorwärmezone. Für einen guten und störungsfreien Betrieb ist es neben einem eng klassierten Kornaufbau und einer gleichmäßigen Beschickung und Entleerung des Ofens wichtig, daß die Luft über den Ofenquerschnitt gleichmäßig verteilt ist und das richtige Größenverhältnis und die richtige Mischung von zu brennendem Material zu Koks eingehalten wird. Obwohl wünschenswert, können kleinkörnige Feststoffe auf diese bekannte Weise nicht verarbeitet werden, da der erforderliche Gasdurchsatz bei Unterschreitung einer bestimmten Steingröße große Schwierigkeiten bereitet.

Man hat daher bereits Verfahren entwickelt, die mit geringeren Schichtdicken arbeiten, so daß kleinteiligeres Material noch gut durchströmt werden kann. Die hierbei verwendete Vorrichtung ist der sogenannte Querstromofen,bei dem das feste Gut in schmaler Schüttung zwischen gasdurchlässigen Wänden in einem Querstrom mit Heißgas oder -luft behandelt wird. Im Querstromofen zum Kalkoder Dolomitbrennen sind große Anströmflächen erforderlich, um bei entsprechender Durchsatzleistung einen einheitlichen Weichbrand zu erzielen. Im Ofengang hat sich bei einer eingesetzten Kornklasse im Bereich von ca. 10/20 bis 40/60 mm als zweckmäßig erwiesen, die Strömungsrichtung mindestens einmal umzukehren, um den durch das einseitige Anströmen bedingten Unterschied im Brand auszugleichen. Im Endeffekt ergeben sich beim Querstromofen Bauhöhen, die denen anderer Schachtöfen nicht nachstehen und die den Einsatz von Material mit einer Korngröße unterhalb der o.a. unteren Grenze nicht zulassen.

Die US-A-2 873 177, die den nächsten Stand der Technik darstellt, beschreibt eine Vorrichtung zur Regenerierung von verbrauchtem Katalysatormaterial, das mit einer koksartigen Schicht aus relativ schweren Kohlenwasserstoffen bedeckt ist. Diese Vorrichtung ist für Temperaturen im Bereich von ca. 540 bis 760°C ausgelegt. Sie umfaßt einen Schacht, der vom Katalysator durchwandert wird, sowie Einrichtungen zum Ein- und Ausleiten von Heizgas, die im Schacht senkrecht zur Längsachse des Schachtes angeordnet sind. Die Zuführung und Abführung des Heizgases zu diesen Einrichtungen erfolgt durch Sammelleitungen, die außerhalb des Schachtes vorliegen.

Die JP-A-53-21076 beschreibt eine Vorrichtung zur Entfernung von $NO_x$ und Staub aus einem Gasstrom. Die Vorrichtung besteht aus einem Reaktor, in dem Leitungen zum Ein- und Ausleiten des Gases angeordnet sind. Die Reinigung des Gases erfolgt an einer im Reaktor vorgesehenen Schüttgutsäule.

Ausgehend von der US-A-2 873 177 liegt der Erfindung die Aufgabe zugrunde, eine Vorrichtung zu schaffen, die einen verbesserten Energieaustausch zwischen körnigen Feststoffen und einem fluiden Medium ermöglichst und es gestattet, kleinkörnige Feststoffe, die nach dem konventionellen Schachtofenprinzip nicht behandelt werden konnten, den besagten Austauschprozessen zugänglich zu machen und beispielsweise einen Brennvorgang zu ermöglichen.

Gelöst wird diese Aufgabe mit Hilfe einer Vorrichtung zum Brennen von Feststoffen, ausgewählt unter Kalkstein, Dolomit, Magnesit und Gips und zum regenerativen Energieaustausch im Bereich der Brenntemperaturen zwischen Feststoffen und fluiden Medien, umfassend einen schachtartigen Reaktor (1), der über Einrichtungen zum Beschikken und Entnehmen von körnigen Feststoffen, Einrichtungen zum Ein- und Ausleiten von fluiden Medien und gegebenenfalls Heiz oder Kühleinrichtungen oder Entstaubungsvorrichtungen verfügt, wobei die Einrichtungen zum Ein- und Ausleiten von fluiden Medien perforierte oder mindestens auf einer Längsseite offene Röhren oder Kanäle (2, 2') umfassen und derart angeordnet sind, daß einerseits die Einrichtungen zum Einleiten, bzw. andererseits die Einrichtungen zum Ausleiten jeweils in einer Ebene angeordnet sind, die im wesentlichen parallel zur Längsachse des Reaktors (1) liegt, so daß einerseits Zuleitungsebenen und andererseits Ableitungsebenen gebildet werden, die parallel zueinander angeordnet sind, wobei jede Zuleitungsebene zwei Ableitungsebenen zugeordnet ist und zwischen den Ableitungsebenen liegt und der Abstand dieser Ebenen nicht kleiner ist als das etwa 5 bis 20-fache und nicht größer als das etwa 100 bis 200-fache des Körnungsdurchmessers des Feststoffes, wobei die Kornklassierungen des Feststoffs im Bereich von 4 - 20 mm liegen und wobei die Röhren oder Kanäle (2, 2') jeweils einer Ebene entweder mit einem Einleitungsschacht (13) oder einem Ausleitungsschacht (4) an der Seitenwand des Reaktors (1) verbunden sind.

Das fluide Medium ist vorzugsweise ein Gas (Brenngas), z.B. Luft, $CO_2$, Stickstoff, Rauchgas oder Wasser und dergleichen.

Die Kanäle sind vorzugsweise als Halbrohre, als Halbrohre mit seitlichen Schenkeln, als Kanäle mit giebelförmigem Querschnitt oder als Kanäle mit giebeiförmigem Querschnitt und seitlichen Schenkeln ausgebildet.

Die Ein- und Ausleitungsschächte sind vorzugsweise auf gegenüberliegenden Seiten des Reaktors angeordnet und erstrecken sich parallel zu dessen Längsachse.

Vorzugsweise ist auf zwei gegenüberliegenden Längsseiten des Reaktors je eine Zuleitung und auf zwei weiteren sich gegenüberliegenden Längsseiten des Reaktors je eine Ableitung so angeordnet, daß sich die mit diesen Zuleitungen und Ableitungen verbundenen Röhren oder Kanäle in einem Winkel von etwa 90° kreuzen.

Der Abstand zwischen einer Einleitungs- und der nächsten benachbarten Ausleitungsebene richtet sich z.B. nach der Korngröße des Aufgabegutes, wobei für geringere Korngrößen ein geringerer Abstand gewählt wird.

Diese Ebenen werden jeweils durch mehrere Leitungen für das fluide Medium gebildet, die in der jeweiligen Ebene so beabstandet sind, daß der kleinkörnige Feststoff gewünschtenfalls zwischen ihnen hindurchwandern kann. Eine Einleitungsebene und die zwei dazugehörigen Ausleitungsebenen bilden dabei eine Energie- und/ oder Stoffaustauscheinheit. Eine oder mehrere dieser Einheiten können zu einem Strömungsbereich zusammengefaßt sein, mehrere dieser Strömungsbereiche wiederum können hintereinander und/ oder parallel geschaltet sein. Ein oder mehrere Strömungsbereiche, die im Reaktor eine eigene Einheit bilden, können mit einem anderen fluiden Medium gleichen Aggregatzustandes durchströmt werden.

Die Röhren oder Kanäle jeweils einer Ebene sind vorzugsweise durch jeweils einen Schacht mit perforierten oder unterbrochenen Wänden ersetzt.

Weitere Merkmale und Vorteile der Erfindung ergeben sich aus der nachfolgenden Beschreibung und den Zeichnungen. Es zeigen:

Figur 1      einen Längsschnitt (entlang der Achse IIa - IIa bzw. IIb - IIb in Figur 4) durch einen erfindungsgemäß ausgebildeten Materialschacht in Querstromanordnung

Figur 2      einen Längsschnitt (entlang der Achse IV - IV in Figur 2) durch den Materialschacht gemäß Figur 2 quer zu den Ein- und Ausleitungskanälen

Figur 3      verschiedene Ausbildungsformen der Ein- und Ausleitungsröhren und -kanäle in perspektivischer Sicht

Figur 4      einen Längsschnitt durch eine Vorrichtung zum Brennen von Kalk und dgl.

Figur 5      die in Figur 6 gezeigte Vorrichtung mit zusätzlichen Vorrichtungen zur $CO_2$-Gewinnung.

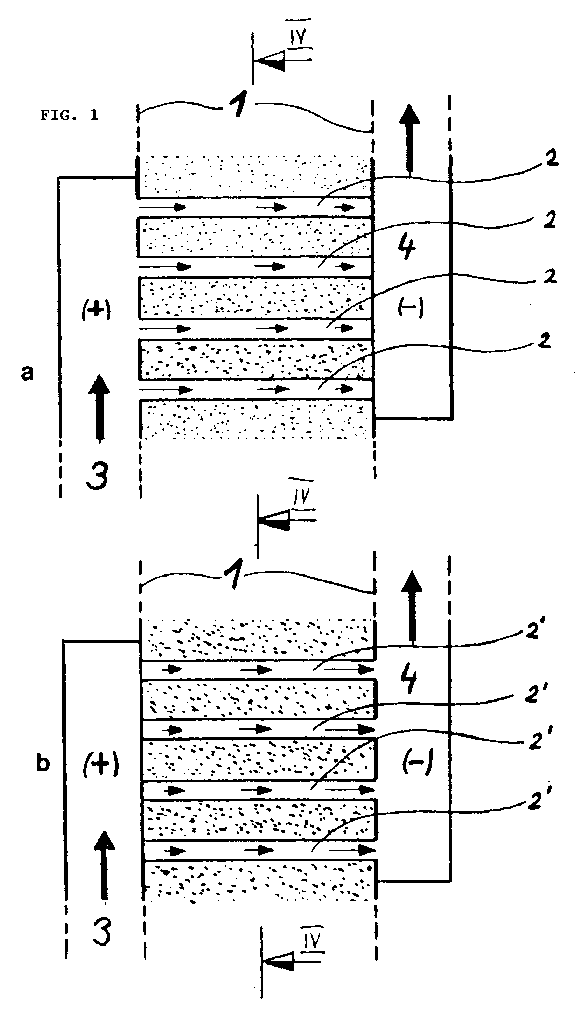

Der Aufbau einer erfindungsgemäßen Vorrichtung ist schematisch in Figur 1 (Längsschnitt) wiedergegeben. An einem Materialschacht 1 (Schachtofen, Füllkörpersäule, Reaktor oder dergl.) befindet sich ein Einleitungsschacht 3(+) und ein Ausleitungsschacht 4(-) für das fluide Medium. Diese Schächte können grundsätzlich in verschiedener, dem jeweiligen Verwendungszweck angepaßter Form ausgebildet sein, z.B. in Form von rechteckigen Schächten, Röhren usw.. Das fluide Medium strömt vom Einleitungsschacht 3 über die Einleitungsebenen 2 durch das aufgegebene Gut und wird nach dem gewünschten Energieaustausch über die Ausleitungsebenen 2' und den Ausleitungsschacht 4 abgeführt.

Die Einleitungsebenen 2 bzw. Ausleitungsebenen 2' sind jeweils parallel zur Längsachse angeordnet. Das fluide Medium wird über den Einleitungsschacht in die Einleitungsebenen 2 geführt, strömt dann quer zur Längsachse zu den entsprechenden Ausleitungsebenen 2' und wird über den Ausleitungsschacht abgeführt.

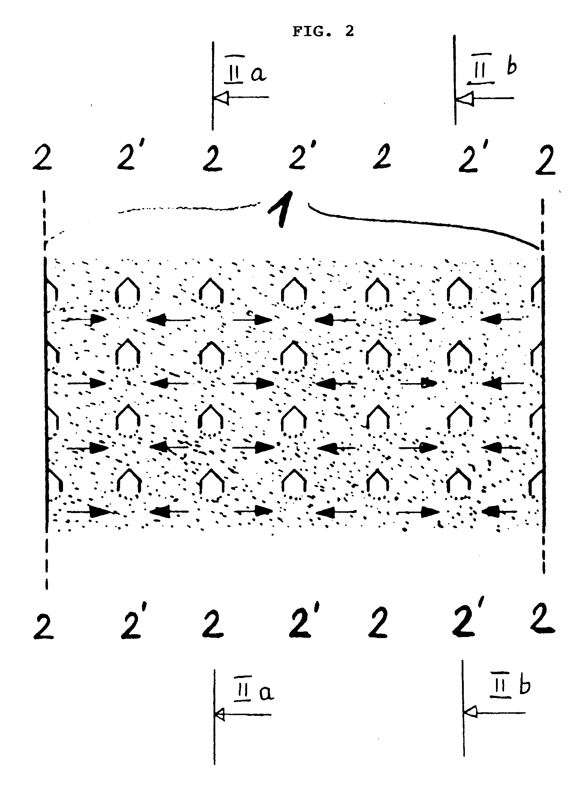

Die Strömungsverhältnisse im einzelnen sind aus Fig. 2 ersichtlich.

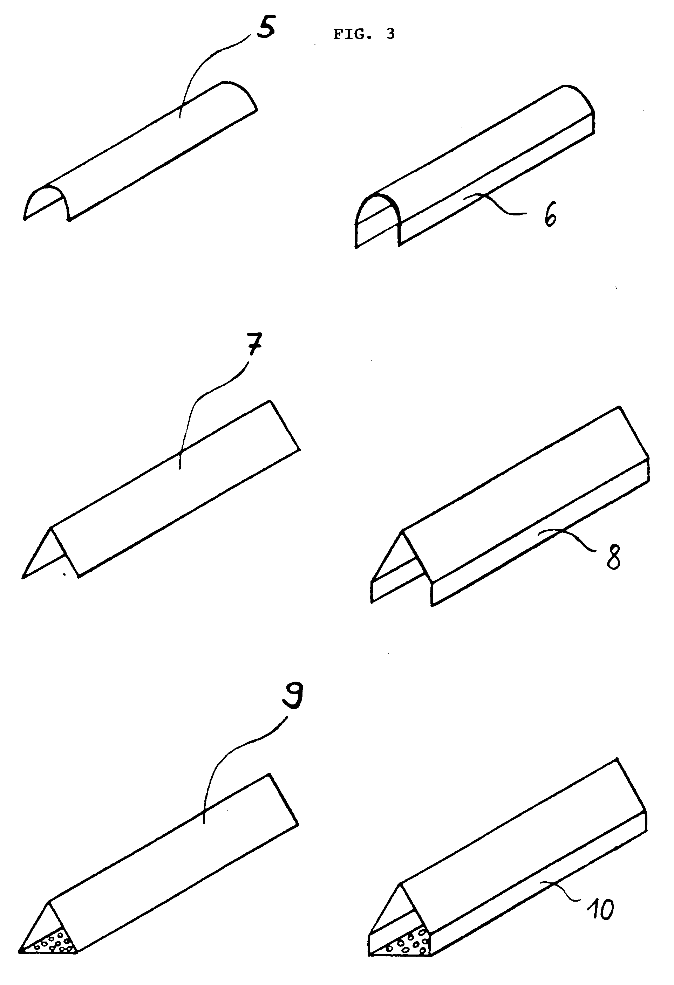

Die Einleitungs- 2 bzw. Ausleitebenen 2' sind in Form von perforierten oder mindestens auf einer Längsseite offenen Röhren oder Kanälen ausgebildet. Die Form ist jedoch nicht darauf beschränkt, vielmehr ist sie dem jeweiligen Verwendungszweck angepaßt. Beispiele sind in Fig. 3 wiedergegeben. Die optimale Gestaltung, Dimensionierung und Anordnung stehen im Zusammenhang mit dem Körnungsdurchmesser, den Ausmaßen des Materialschachtes, dem Strömvolumen, dem Verfahren und dergl. und ist für den Fachmann leicht ersichtlich.

Beim Füllgut kann es sich um eine durchgehende, ruhende oder wandernde Schüttgutsäule handeln. Dabei kann der Energieaustausch zwischen dem fluiden Medium und (oder an) der Schüttgutsäule stattfinden.

Es ist bekannt, daß in einem Ofenschacht eine konstante Gasströmung durch eine stationäre oder bewegte Schüttung gleichbleibender Höhe mit abnehmenden Körnungsdurchmesser des Schüttgutes einen zunehmenden Widerstand zu überwinden hat. Fallender Körnungsdurchmesser führt bei üblichen Gasgeschwindigkeiten auch zunehmend zu einer instabilen Schüttgutsäule, wobei eine einheitliche Durchströmung ebenfalls zunehmend schwieriger wird, dies umsomehr, je größer die Querschnittsfläche des Ofenschachtes ist.

Mit Hilfe der erfindungsgemäßen Vorrichtung können jedoch auch bei kleinen Körnungsdurchmessern und niederem Vordruck dennoch hohe Gasdurchsätze pro Feststoff-Volumeneinheit erzielt werden. Der kleinere Körnungsdurchmesser ermöglicht sowohl bei endothermen als auch exothermen Prozessen kürzere Verweilzeiten und damit wesentlich kleinere Baueinheiten bei vergleichbaren Durchsätzen und erhöhtem, bislang nicht erreichbarem Wirkungsgrad.

Mit Hilfe der erfindungsgemäßen Vorrichtung können z.B. beim Brennen von Kalkstein, Dolomit, Magnesit, Gips und dergleichen, die bisher in Schachtöfen nicht einsetzbaren unteren Kornbereiche unterhalb ca. 20 bis 40 mm, bis hinab zu wenigen Millimetern, verwendet werden.

Die Vorrichtung kann auch unter Anwendung von Druck bis zu ca. 10 bar betrieben werden. Im allgemeinen ist dies nicht erforderlich, sondern es genügt, den zum Durchströmen der Vorrichtung und zur Überwindung des durch die Körnung bedingten Strömungswiderstandes geringen zusätzlichen Vordruck aufzuwenden.

Die Erfindung wird anhand der nachfolgenden Beispiele näher ererläutert.

Beispiel 1

Trocknung von Kalksteinsplitt

Ein gewaschener Kalksteinsplitt mit 4 bis 6 mm Korndurchmesser mit einer Anfangsfeuchte von ca. 8 - 12% $H_2O$ wird für die anschließende Kalzinierung auf einen Rest Wassergehalt von > 0,2 bis 0,3 % getrocknet. Die Trocknung erfolgt in einem Materialschacht gemäß Fig. 1 mit einer Tiefe von 0,4m, einer Breite von 1 m und einer Höhe von 2 m. Der Einleitungsschacht 3 und der Ausleitungsschacht 4 haben eine Tiefe von 0,2 m, eine Breite von 1 m und eine Höhe von 2 m. Es ist ein Strömbereich mit 5 Energie- und/oder Stoffaustauscheinheiten, bestehend aus 5 Einleitungsebenen 2 und 11 Ausleitungsebenen 2' vorhanden, wobei der Abstand dieser Ebenen 10 cm beträgt. Pro Ebene sind 14 (an den Seiten Halbkanäle) Kanäle im Abstand von 4 cm (Abstand zwischen den Seitenschenkeln) bzw. 6 cm (Abstand von Giebel zu Giebel) vorhanden, die gemäß Form 8 in Fig. 3 ausgebildet sind. Die Kanallänge beträgt 40 cm, die Schenkelhöhe 1 cm und die Giebelhöhe und Giebelbreite 3 cm.

Die Trocknung erfolgt in der Längsstromanordnung, wobei ca. 4500 - 6000 $Nm^3/h$ Heißgas von einer Temperatur von ca. 500 - 700°C erforderlich sind. Die Gasgeschwindigkeit beträgt dabei 0,2 m/sec, bezogen auf den leeren Schacht zwischen einer Einströmebene und einer Ausströmebene und bei Normalbedingung. Die Materialgeschwindigkeit beträgt ca. 4 - 5 mm/sec, so daß sich eine Verweilzeit von ca. 7 min ergibt, bezogen auf ein Schüttgewicht von 1,5. Der Gasdurchsatz beträgt pro Einheit 1152 $Nm^3/h$.

Beispiel 2

Abgasentstaubung

Zur Entstaubung eines Ofenabgases von ca. 200°C verwendet man die im Beispiel 1 beschriebene Vorrichtung. Als Filter dient ein Quarzrundkies oder ein Steinsplitt einer engen Kornklassierung mit einem Korndurchmesser von 2, 3 oder 4 mm. Die Abreinigung des Filtermaterials erfolgt außerhalb des Materialschachts.

Beispiel 3

Brennen von Kalkstein, Dolomit oder Magnesit

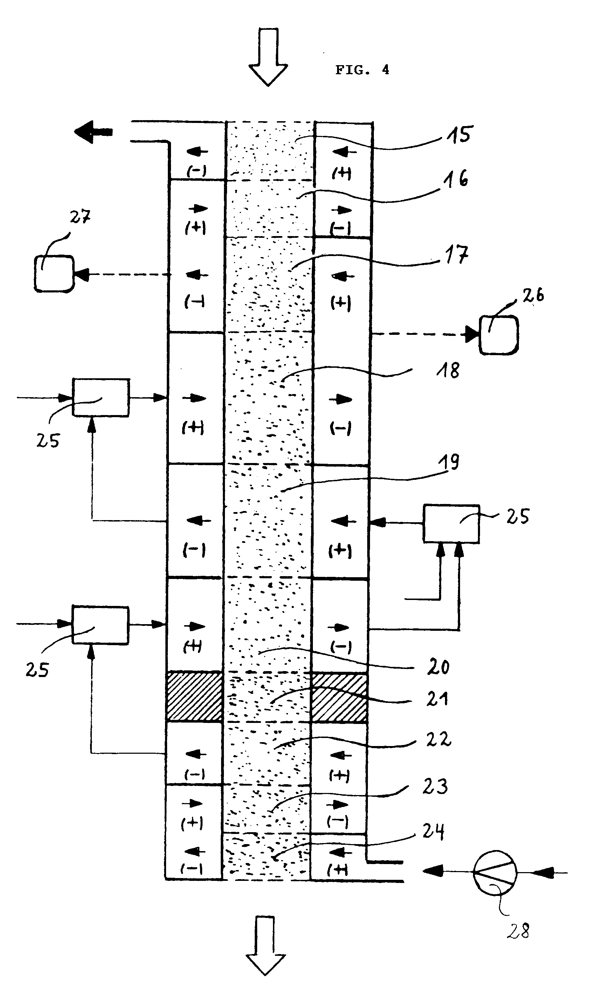

Das Brennen obiger Produkte erfolgt in einem Schachtofen gemäß Fig. 4. Die Anordnung der Ein- und Ausleitungsschächte sowie der Ein- und Ausleitungsebenen entspricht im Prinzip der in Fig. 1 gezeigten Anordnung. Die Ein- und Ausleitungsebenen wurden der Übersicht halber nicht eingezeichnet.

Der Materialschacht besitzt eine Tiefe von 0,8 m und eine Breite von 1,2 m. Die Ein- bzw. Ausleitungsschächte haben eine Tiefe von 0,4 m und eine Breite von 1,2 m. Der Materialschacht ist unterteilt in eine Vorwärmzone 15, 16, 17, eine Brennzone 18, 19, 20 und eine Kühlzone 22, 23, 24. Zwischen Kühlzone und Brennzone befindet sich eine Nachentsäuerungszone 21. Die einzelnen Stufen dieser Zonen stellen hintereinander geschaltete Strömungsbereiche dar.

Diese Strömungsbereiche wiederum sind folgendermaßen in Austauscheinheiten unterteilt. Die Vorwärmzone umfaßt insgesamt 10 Austauscheinheiten (3 + 3 + 4) mit einer Gesamthöhe von ca. 260 cm. Die Brennzone besteht aus 25 Austaucheinheiten (10 + 8 + 7) mit einer Gesamthöhe von ca. 454 cm. Die Kühlzone umfaßt insgesamt 10 Austauscheinheiten (4 + 3 + 3) mit einer Gesamthöhe von ca. 214 cm. Der Abstand zwischen den Ein- und Ausleitungsebenen beträgt in der Vorwärmzone 10 cm und in der Brenn- und Kühlzone 8 cm.

In allen Zonen besitzen die Kanäle der Ein- bzw. Ausleitungsebenen die Giebelform mit Seitenschenkel (Form 8 gemäß Fig. 3), wobei die Länge 80 cm beträgt. In der Brenn- und Kühlzone ist die lichte Giebelhöhe und die Breite der Kanäle 4 cm und die Schenkelhöhe 2 cm. In der Vorwärmzone beträgt die lichte Giebelhöhe und -breite 6 cm und die Schenkelhöhe 2 cm. Man verwendet 12 Kanäle pro Ebene (11 Vollkanäle, 2 Halbkanäle an den Seiten) in der Brenn- und Kühlzone, wobei der Abstand zwischen den Seitenschenkeln 6 cm und von Mitte zu Mitte 10 cm beträgt. Die Vorwärmzone umfaßt 10 Kanäle pro Ebene (9 Vollkanäle, 2 Halbkanäle an den Seiten), wobei der Abstand von Mitte zu Mitte 12 cm und der Abstand zwischen den Seitenschenkeln 6 cm beträgt.

Es sind Kornklassierungen des Aufgabeguts von 4 - 20 mm einsetzbar. Bei einer Gasgeschwindigkeit von 0,1 m/sec. und 4 - 6 mm Körnungsdurchmesser, bezogen auf den leeren Schacht und Normalbedingungen, ist der Schachtofen für eine Tagesleistung von ca. 100 t Calciumoxid ausgelegt.

Dem Strömungsbereich 18, 19, 20 der Brennzone ist jeweils eine eigene Brenn- und Mischkammer 25 zugeordnet. Beim vorliegenden Schachtofen wird die Hauptmenge des fluiden Mediums, in diesem Falle Luft, and der Basis des Ofens eingeblasen, z.B. mit Hilfe des Kaltgebläses 28. Dies führt dazu, daß der unterste Brennbereich den niedrigsten $CO_2$-Partialdruck und den größten Luftüberschuß aufweist. Dies begünstigt bekanntlich die Entsäuerung wesentlich, erlaubt sehr weiche Brände sowie den Einsatz von brenntechnisch problematischen, weniger hochprozentigen Materialien.

Der unterste Brennzonenbereich 20 dient dabei zur Steuerung der Produkteigenschaften (Weich-, Mittel- oder Hartbrand). Der oberste Brennzonenbereich 18 ermöglicht die Zufuhr von sehr heißen Gasen, wobei ein schneller Temperaturabbau ohne Gefährdung der Brennguteigenschaften erfolgt. Im vorliegenden Fall hat das erfindungsgemäße Verfahren den Vorteil, daß die Nachentsäuerungszone 21 stets voll wirksam bleibt. Der Grund dafür liegt darin, daß zwischen der Kühlzone 22 und dem Brennzonenbereich 20 ein sehr niedriges Druckgefälle besteht und deshalb noch entstehendes $CO_2$ mit den geringen Mengen heißer Spülluft ständig aus dem Gleichgewicht entfernt werden kann, ohne die adiabatische Abkühlung zu gefährden. Ein weiterer Vorteil ist darin zu sehen, daß der Wärmeüberschuß des Prozeßabgases an den Entnahmestellen 26 und 27 entnommen werden kann.

## Beispiel 4

### Dolomitischer Halbbrand

Der dolomitische Halbbrand kann unter Verwendung handelsüblicher Absiebungen (von beispielsweise 0,8 - 1,5 mm, 1 - 2 mm und 2 - 4 mm) in der im Beispiel 3 beschriebenen Vorrichtung durchgeführt werden, so daß es möglich ist, in ein und demselben Schachtofen abwechselnd dolomitischen Vollbrand und Halbbrand herzustellen. Gegebenenfalls reicht es jedoch aus, eine 1 - 2 stufige Ausführung der Brennzone vorzusehen. Es ist jedoch zweckmäßig, die Abstände der Ebenen und die Kanalabmessungen auf die Korngröße abzustimmen. Allgemein gilt, daß in Fällen, in denen mehrere Absiebungen nacheinander zum Einsatz kommen, die gröbste Absiebung die Anordnung der Ebenen und Kanalabmessungen bestimmt. Damit ist es möglich, anders als in herkömmlichen Schachtöfen, insgesamt ein recht breites Kornband einzusetzen.

Die Brenntemperatur darf beim Halbbrand 800 - 850°C nicht übersteigen. Gleichzeitig ist ein $CO_2$-Partialdruck von > 25 - 30 % erforderlich. Dieser wird erzielt über einen Wälzgaskreislauf im Brennbereich, indem Prozeßabgas mittels Heißgasgebläse an den Entnahmestellen 26 bzw. 27 (Fig. 4) entnommen und den entsprechenden Brenn- und Mischkammern zugeführt wird.

Mit der erfindungsgemäßen Anordnung läßt sich dann ein Wirkungsgrad von 90 - 95 % (nach Abzug eines verfahrenstechnisch bedingten Kühlaufwands ergibt sich ein effektiver Wirkungsgrad von 80%) erzielen. Dagegen ergeben herkömmliche Verfahren, die in Drehöfen vorgenommen werden müssen, lediglich einen Wirkungsgrad von ca. 18%.

## Beispiel 5

### Brennen von Kalk, Dolomit oder Magnesit mit $CO_2$, $H_2O$ oder $CO_2/H_2O$ als Trägergas

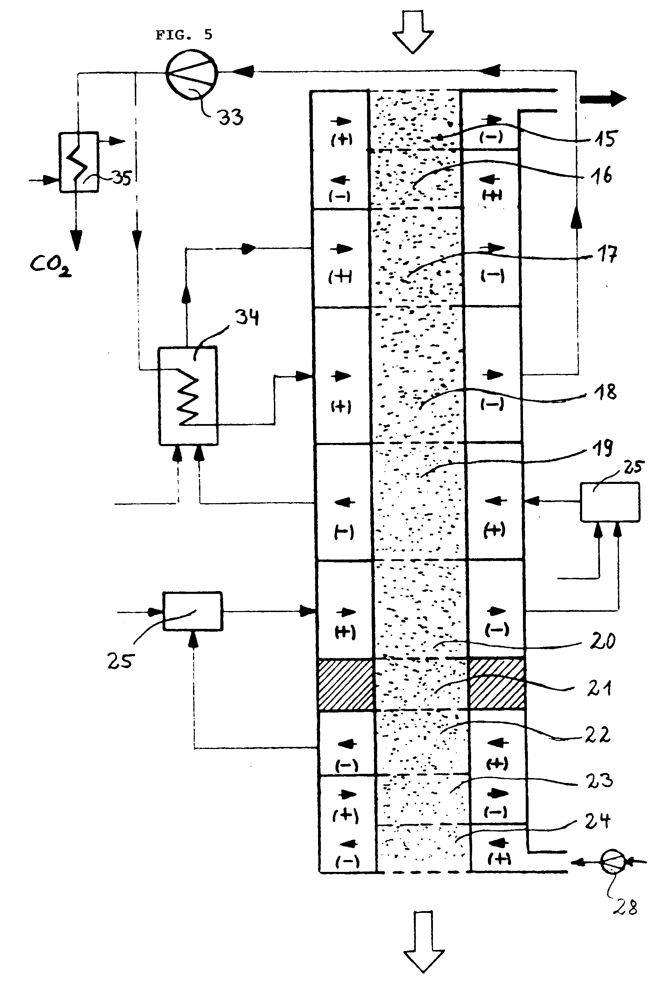

Man verwendet die in Fig. 5 dargestellte Vorrichtung, die vom Aufbau her der Vorrichtung gemäß Fig. 4 entspricht. Die oberste Brennzone 18 wird jedoch indirekt folgendermaßen erhitzt. Beim Aufheizen entwickelt sich das für die Energieübertragung erforderliche Trägergas $CO_2$ als Prozeßabgas von selbst. Dieses wird beispielsweise als Wälzgas aus der obersten Brennzone 18 abgezogen, über das Heißluftgebläse 33 einem Wärmetauscher 34 und von dort wieder der Brennzone 18 zugeführt. Entsprechend dem kontinuierlichen Durchsatz an zu brennendem Material kann $CO_2$ aus dem Wälzgaskreislauf über den Abscheider 35 abgezweigt und als reines $CO_2$ gewonnen werden. In der Fig. 5 ist der Übersichtlichkeit halber die indirekte Beheizung lediglich für die Brennzone 18 gezeigt, es können jedoch auch alle anderen Brennzonen indirekt beheizt werden.

Die indirekte Erhitzung des Schachtofens läßt sich auch unter Einsatz von $H_2O$ bzw. $H_2O/CO_2$ als Trägergas durchführen. Dies hat den Vorteil, daß die Brenntemperatur erniedrigt wird und man somit bei sehr milden Brennbedingungen arbeiten kann. Gleichzeitig erhält man auf diese Weise ein gewaschenes $CO_2$ als Nebenprodukt.

Dieses Verfahren läßt sich auch auf doppelte Umsetzungen von Erdalkalicarbonaten mit Quarz und dergleichen analog auch auf Brennen von Gips, Desorptionsvorgänge, wie z.B. Gewinnung von SO$_2$ durch thermische Spaltung von SO$_3$ auf Aktivkoks und dergleichen, sowie auch auf exotherme Vorgänge, wie z.B. Röstvorgänge und dergleichen, anwenden.

Beispiel 6

Regenerativer Wärmetauscher

Die Anwendung des der Erfindung zugrundeliegenden Strömungsprinzips auf den Wärmeaustausch von Gas/Gas durch eine Kombination der Wärmeaustauschvorgänge von Gas/Fest und Fest/Gas ergibt einen regenerativen Wärmetauscher.

Die hierfür erforderliche Vorrichtung umfaßt mindestens zwei getrennte Strömbereiche, die alternierend heiß und kalt geblasen werden. Ein Strömbereich wird dargestellt durch einen Materialschacht (1 m Tiefe; 2 m Breite; ca. 2 m Höhe) mit fünf Austauscheinheiten mit einen Ebenenabstand von 0,2 m (entspr. Fig. 1). Form, Abmessung und seitenabstände der Kanäle entsprechen den in Beispiel 1 gemachten Angaben. Als Wärmeüberträger kann beispielsweise ein Quarzrundkies mit einem Korndurchmesser von 2, 4 oder 6 mm verwendet werden. Die Gasgeschwindigkeit beträgt ca. 0,1 m/sek, bezogen auf den leeren Schacht unter Normalbedingungen.

**Patentansprüche**

1. Vorrichtung zum Brennen von Feststoffen, ausgewählt unter Kalkstein, Dolomit, Magnesit und Gips, zur Abgasentstaubung und zum regenerativen Energieaustausch im Bereich der Brenntemperaturen zwischen Feststoffen und fluiden Medien, umfassend einen schachtartigen Reaktor (1), der über Einrichtungen zum Beschicken und Entnehmen von körnigen Feststoffen, Einrichtungen zum Ein- und Ausleiten von fluiden Medien und gegebenenfalls Heiz oder Kühleinrichtungen oder Entstaubungsvorrichtungen verfügt, wobei die Einrichtungen zum Ein- und Ausleiten von fluiden Medien perforierte oder mindestens auf einer Längsseite offene Röhren oder Kanäle (2, 2') umfassen und derart angeordnet sind, daß einerseits die Einrichtungen zum Einleiten, bzw. andererseits die Einrichtungen zum Ausleiten jeweils in einer Ebene angeordnet sind, die im wesentlichen parallel zur Längsachse des Reaktors (1) liegt, so daß einerseits Zuleitungsebenen und andererseits Ableitungsebenen gebildet werden, die parallel zueinander angeordnet sind, wobei jede Zuleitungsebene zwei Ableitungsebenen zugeordnet ist und zwischen den Ableitungsebenen liegt und der Abstand dieser Ebenen nicht kleiner ist als das etwa 5 bis 20-fache und nicht größer als das etwa 100 bis 200-fache des Körnungsdurchmessers des Feststoffes, wobei die Kornklassierungen des Feststoffs im Bereich von 4 - 20 mm liegen und wobei die Röhren oder Kanäle (2, 2') jeweils einer Ebene entweder mit einem Einleitungsschacht 13) oder einem Ausleitungsschacht (4) an der Seitenwand des Reaktors (1) verbunden sind.

2. Vorrichtung nach Anspruch 1, dadurch gekennzeichnet, daß die Kanäle (2, 2') als Halbrohre (5), als Halbrohre mit seitlichen Schenkeln (6), als Kanäle mit giebelförmigem Querschnitt (7, 9) oder als Kanäle mit giebelförmigem Querschnitt und seitlichen Schenkeln (8, 10) ausgebildet sind.

3. Vorrichtung nach Anspruch 1, dadurch gekennzeichnet, daß die Röhren oder Kanäle (2, 2') jeweils einer Ebene durch jeweils einen Schacht mit perforierten oder unterbrochenen Wänden ersetzt sind.

4. Vorrichtung nach einem der vorhergehenden Ansprüche, dadurch gekennzeichnet, daß im Reaktor mehrere Einheiten vorhanden sind, die jeweils aus einer Einleitungsebene und den zwei dazugehörigen Ausleitungsebenen bestehen, die einen gemeinsamen Einleitungsschacht und einen gemeinsamen Ausleitungsschacht haben und hintereinander und/oder parallel geschaltet sind.

**Claims**

1. Apparatus for roasting solids, selected from among limestone, dolomite, magnesite and gypsum, for removing dust from waste gas and for regenerative energy exchange in the range of combustion temperatures between solids and fluid media, comprising a shaft-like reactor (1) provided with means for supplying and removing granular solids, means for introducing and discharging fluid media and optionally heating or cooling means or dust removing equipment, the apparatus for introducing and discharging fluid media comprising pipes or channels (2,2') which are perforated or at least open along one longitudinal side and are arranged in such a way that the introduction means, on the one hand, and the discharge means, on the other hand, are each arranged in a plane which lies substantially parallel to the longitudinal axis of the reactor (1), so that on the one hand introduction planes and on the other hand discharge planes are formed which are arranged parallel to each other, each introduction plane being associated with two discharge planes and being located between the discharge planes and the spacing between these planes being not less than about 5-20 times and not more than about 100-200 times the particle diameter of the solids, the particle sizes of the solids being in the range from 4-20 mm, and the pipes or channels (2,2') of any one plane being connected to either an introduction shaft ( 3) or a discharge shaft (4) on the side wall of the reactor (1).

2. Apparatus according to claim 1, characterised in that the channels (2,2') are constructed as half-pipes (5) as half-pipes with lateral arms (6), as channels of gable-shaped cross section (7,9) or as channels of gable-shaped cross section and having lateral arms (8,10).

3. Apparatus according to claim 1, characterised in that the pipes or channels (2,2') of any one plane are replaced by a shaft with perforated or interrupted walls.

4. Apparatus according to one of the preceding claims, characterised in that, in the reactor, there are a plurality of units each of which consists of an introduction plane and the two associated discharge planes which have a common introduction shaft and a common discharge shaft and are connected one behind the other and/or parallel to one another.

**Revendications**

1. Dispositif pour calciner des solides sélectionnés parmi la pierre calcaire, la dolomite, la magnésite et le gypse, pour le dépoussiérage des gaz d'évacuation et pour l'échange d'énergie de régénération dans la plage des températures de calcination entre solides et fluides, comprenant

un réacteur (1) en forme de cuve oui dispose d'installations d'entrée et de sortie de solides granulés, d'installations d'entrée et de sortie de fluides et éventuellement d'installations de chauffage ou de refroidissement ou de dispositifs de dépoussiérage,

les installations d'entrée et de sortie de fluides comprenant des tuyaux ou chéneaux (2, 2') perforés ou du moins ouverts sur un côté longitudinal et étant disposés de telle manière que, d'une part, les installations d'entrée ou, d'autre part, les installations de sortie sont, chacune, disposées dans un plan qui se trouve sensiblement parallèlement à l'axe longitudinal du réacteur (1), de manière qu'il est formé, d'une part, des plans d'entrée et, d'autre part, des plans de sortie qui sont disposés parallèlement les uns par rapport aux autres, chaque plan d'entrée correspondant à deux plans de sortie et étant disposé entre les plans de sortie, la distance entre ces plans n'étant pas inférievre à environ de 5 à 20 fois et pas supérieure à environ de 100 à 200 fois le diamètre dc granulé du solide, les classifications de grain du solide se situant dans la plage de 4 à 20, et

les tuyaux ou chéneaux (2, 2') de chacun des plans étant en communication soit avec une cuve d'entrée (3), soit avec une cuve de sortie (4) sur la paroi latérale du réacteur (1).

2. Dispositif suivant la revendication 1, caractérisé en ce que les chéneaux (2, 2') se présentent sous forme de demi-tuyaux (5), de demi-tuyaux à branches latérales (6), de chéneaux à section en forme de toit (7, 9) ou de chéneaux à section en forme de toit et à branches latérales (8, 10).

3. Dispositif suivant la revendication 1, caractérisé en ce que les tuyaux ou chéneaux (2, 2') situés dans un même plan sont remplacés, chacun, par une cuve à parois perforées ou interrompues,

4. Dispositif suivant l'une des revendications précédentes, caractérisé en ce que dans le réacteur sont présentes plusieurs unités qui se composent, chacune, d'un plan d'entrée et de deux plans de sortie correspondants, qui ont une cuve d'entrée commune et une cuve de sortie commune et sont commutées l'une derrière l'autre et/ ou en parallèle l'une avec l'autre.

FIG. 1

FIG. 2

FIG. 3

FIG. 4

FIG. 5